# EUROPEAN PATENT SPECIFICATION

(11) **EP 0 432 590 B1**
(45) Date of publication and mention of the grant of the patent: **07.02.1996**
(21) Application number: 90122981.5
(22) Date of filing: 30.11.1990
(51) Int. Cl.: B60J 5/04, B60J 10/06

(54) **Door for vehicles and method for the making of said door**
Fahrzeugtür und Vorrichtung zur Herstellung dieser Tür
Porte de véhicule et sa méthode de fabrication

(30) Priority: 15.12.1989 IT 6810189
(43) Date of publication of application: 19.06.1991
(73) Proprietor: FIAT AUTO S.p.A., I-10135 Torino (IT)
(72) Inventor: Dibenedetto, Giuseppe, 20010 Pogliano Milanese (IT)
(74) Representative: Jorio, Paolo

(56) References cited:
- EP-A- 0 304 768
- FR-A- 2 613 414
- IT-A-01 237 692

## Description

The present invention relates to a door for vehicles of the type comprising a window delimited by a frame and a shutting winding glass for said window, selectively mobile between the latter and an underlying accessory vane provided within the door, said glass being available flush with the body when shut. Moreover, the invention relates to a method for obtaining such a door.

The so called lowering glass of the aforedescribed type well-known doors, e.g. a glass whose vertical sliding movement is controlled by a window regulating means is supported slidable by the window frame, which can be provided rigid with the door framework or, preferably,as an independent element which is mounted on the door and fastened to it, for example by means of screws as shown, e.g., in EP-A-0 304 768. In both cases the mounting of the lowering glass proves to be complex and difficult and the perimeter seal strip of the window as well as the seal strips of the door have to be made with very complex sections. Moreover, the solutions known require that any clearance and the stop position should be adjusted on the assembly line with all the drawbacks that this involves. Finally the solutions known are not completely suitable from the attractive point of view since the window guides and/or the fastening knobs of the glass supporting shoes may remain in view.

The object of the present invention is to provide a door of simple and economical structure which enables to use glasses arranged flush with the vehicle body and to mount them quickly without needing to adjust the winding glass guiding means after the assembly.

Said object is attained according to the invention which relates to a door for a vehicle of the type disclosed in EP-A-0 304 768 and claimed in claim 1.

Moreover the invention relates to a method for making a door for vehicles, as claimed in claim 8

The invention will be more apparent from the non-limiting description of an embodiment thereof given hereinafter by way of example with reference to the accompanying drawings in which:
Figure 1 is a front view of the door in accordance with the invention;
Figure 2 is a front view of a subunit of the door of Figure 1; and
Figures 3 and 4 show, exploded and assembled, respective corresponding details of Figures 1 and 2, sectioned on the lines III-III and IV-IV.

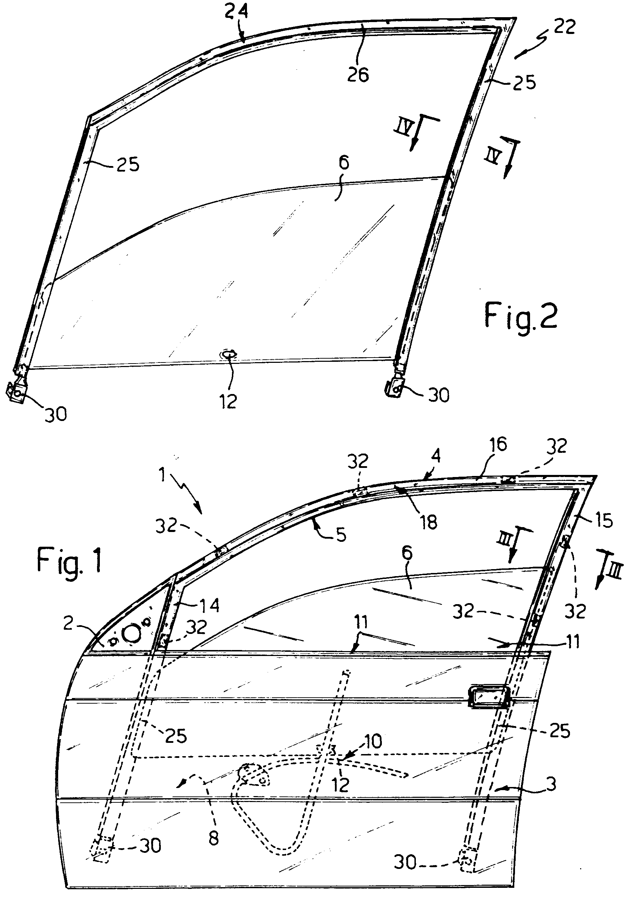

In Figures 1 and 2 the reference numeral 1 indicates overall a door for vehicles, in particular for a motor vehicle of any well-known type and not illustated for simplicity, arranged to shut and laterally delimit a passenger compartment of the aforesaid vehicle; the door 1 comprises a supporting framework 2 provided with an outer sheet panel 3 and a frame 4 delimiting a window 5 arranged to be shut by a glass 6 supported by the framework 2 and selectively mobile between the window 5 and an underlying accessory vane or compartment 8 provided within the door 1; the accessory vane 8, is arranged to contain said glass 6 and, for example, a well-known window regulator 10, and communicates with the interior of the window 5 through an aperture 11 provided at the base of the latter, between the framework 2 and the outer panel 3; the glass 6, is, at the bottom, provided with a securing hole 12 for the device 10, and is mobile through aperture 11. The frame 4, of overall inverted channel shape, comprises a pair of posts or upright frame elements 14, 15 and an upper cross-member 16, realizing an upper frame element extending therebetween

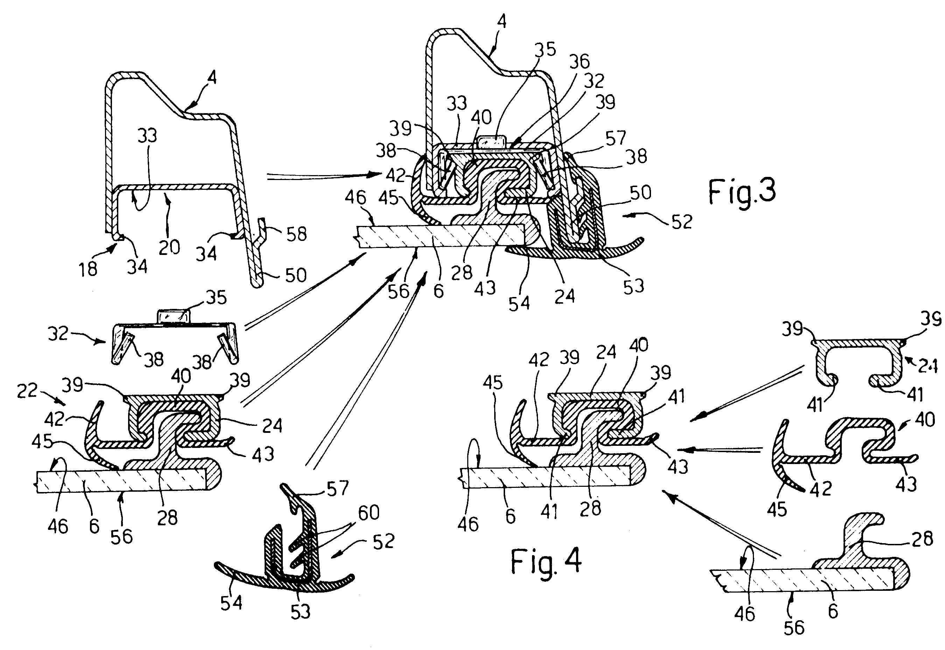

According to the invention, the frame 4 is laterally delimited on the side of door 1 facing the vehicle exterior (with reference to the position of said passenger compartment) by a front surface 18 (Figure 3) which is provided, all along the development of the frame 4, with a channel, the cavity 20 of which is arranged to receive, together with the compartment 8, a premountable self-supporting unit 22 (Figure 2) comprising the glass 6; in particular, the glass 6 is mounted slidable on a substantially rigid supporting element 24 the shape of which is copies that of the frame 4, for example constitued of an aluminium section in the form of an inverted channel lengthwise so as to reproduce the profile of the frame 4; therefore said element 24 too comprises a pair of posts or upright frame elements 25, which can be coupled with the posts 14, 15, and an upper cross member or frame element 26 which can be coupled with the cross member 16; the glass 6 is slidingly coupled with the posts 25 by means of respective synthetic plastic L-guide shoes 28 of its own which are co-moulded on the side edges of the glass 6 in a well-known manner.

The posts 25 are longer than the posts 14, 15 of the window frame 4 and therefore, the element 24 being coupled with the frame 4, are partly housed within the accessory compartment 8 through the communicating aperture 11; in order to ensure their securing to the workframe 2 and the frame 4, with which the latter is rigid the posts 25 are provided, at their respective lower extreme ends, with corresponding fastening brackets 30, which can be secured to the framework 2, for example by means of well-known screws or bolts, not illustrated for simplicity. The element 24 is dimensioned and profiled so that it can be housed within the channel-shaped cavity 20 of the frame 4. According to a further characteristic of the invention, moreover, there are provided snap-hooking means to fasten the frame 4 to the element 24 in a removable manner, once it has been coupled with the channel-shaped cavity 20. In the present case said snap-hooking means are directly housed within the channel-shaped cavity 20 and comprise a plurality of small U-springs which are filed between a bottom wall 33 of the cavity 20 and respective side edges 34 of said cavity (Figure 3) shaped so as to define respective front shoulders opposing the bottom wall 33; moreover the small springs 32 each are provided with a respective locking rear element 35 which engages through the bottom wall 33 of the cavity 20 which is provided with suitable slots 36 cut at intervals with suitable pitch, so that they are held in the direction of the longitudinal development of the cavity 20 as well.

The small springs 32, once mounted inside the cavity 20, are arranged to snap-receive the profiled element 24 and to lock it against the frame 4; actually said small springs are provided with respective side resilient tongues 38 under which respective side projecting parts 39, provided at the rear of the profiled element 24, are arranged to be engaged. The profiled element 24 (Figure 4) is channel-shaped and houses a first peripheral seal strip 40 of uniform section which, therefore, is part of the premountable unit 22 as well; the strip 40 is snap-fixed within the profiled element 24 by two respective opposing side edges 41 of the latter, bent to face into the element 24 interior, and is provided laterally cantilever with two opposing lips, respectively an L-shaped lip 42, and a lip 43 facing the frame 4, arranged to fluid-tight cooperate with said frame, and with a further lip 45 extending cantilever from the lip 42 at the level of its bend, and into the opposite direction, so as to substantially define a T together with the lip 42; lip 45 is arranged to fluid-tight cooperate with an inner surface 46 of the glass 6.

In order to ensure a perfect seal and drive of the glass 6 the frame 4 is provided (Figure 3), front cantilever in relation to the surface 18 and on one of its outer sides, with a perimeter tongue 50 astride of which there is mounted a second peripheral seal strip 52 internally provided with a rigid U-shaped core 53 and provided laterally cantilever with at least one lip 54 arranged to slide-cooperate with an outer surface 56 of the glass 6 to pack-tighten the latter together with the lip 45 of the strip 40 in other words, as well shown by the drawings, lips 45, 54 form a channel for slidably and frictionally receiving the vertical edge portion of glass 6. The locking in position of the strip 52 on the tongue 50 is ensured by a rear lip 57 of said strip arranged to be put onto a raised rear edge 58 of the tongue 50 but also by respective transverse fixing lips 60 internally provided on the U-shaped strip 52.

The procedure for obtaining the above described door 1 is as follows. First the self-supporting structure consisting of the frame 4 provided with the channel-shaped front cavity 20, of the framework 2 and of the outer skin which consists of the panel 3 is obtained in a well-known manner through sheet metal pressing and welding; the frame 4 can be constructed separately and then mounted onto the framework 2, or it can be obtained in the traditional way by the overlapped jointing of suitably shaped parts of the framework 2 and of the skin 3 (which, in this case, does not consist of a simple panel but of a more complex element formed by the shutting panel of compartment 8 and by a further element defining the front part of the frame 4), or it can be obtained in accordance with the description given in the Italian Patent application IT-A-1 237 692, registered at the same date, by the same applicant, under the title of "Door for vehicles". Simultaneously or successively, operating off the assembly line, for example in suitably equipped shops, the assembly of the subunit 22 is carried out by first mounting the seal strip 40 into the element 24 and, successively, by mounting the glass 6 through insertion of the side guide-shoes 28, moulded on said glass, into the strip 40, in the space let free by the latter within the element 24; these operations can be performed with extreme ease and very quickly since the profiled element 24 can be freely put in any suitable position and since no other elements empede access to the inside of the profiled element 24.

Finally, the self-supporting unit 22, already inspected and with the plays adjusted so as to ensure that the glass 6 can slide freely without vibrations, is carried to the assembly line where it is coupled to the self-supporting structure of the door 1, constituted of the frame 4, the framework 2 and the panel 3 previously assembled, already painted and possibly mounted on the vehicle body; the assembly of the subunit 22 is carried out as follows: first the small springs 32 are placed into the cavity 20 by inserting them with the elements 35 into the slots 36; then the unit 22 is mounted by inserting, from the top, the posts 25 through the aperture 11 until the cross-member 26 faces the cross-member 16; at that point the frame 4 which has already received the small springs 32 which, at present, are fastened to it in a rigid manner is aligned opposite the upper part of the profiled element 24. Therefore it is sufficient to frontly squeeze the latter into the channel-shaped cavity 20 so as to have it introduced into it and subsequently locked on the frame 4 due to the snap-insertion of the projecting parts 39 under the tongues 38; finally it is proceeded to the completion of the unit 22 fastening by locking the brackets 30, which are within the compartment 8, to the framework 2 and then connecting the glass 6 with the device 10; these operations are performed on the internal side of the door, that is to say on the part delimited by the framework 2 where the compartment 8 is perfectly accessible, the finishing panel having not been mounted yet.

The advantages of the invention are apparent from the foregoing description; the adjustment of the glass 6 stop position can be performed off the line, during the assembly of the unit 22 - assembly which is so very simple and quick that it can also be automized; on the other hand the aligning of the window frame 4 with the door opening 8 is directly performed during the construction of the self-supporting structure of the door 1 and, therefore, there are no plays to be adjusted on the line; the final assembly on the line is performed quickly and with simple movements (a vertical translation and a transverse thrust), therefore this operation can also be easily robotized. Finally, the door thus obtained is of good stiffness, the glass 6 is guided all along its trajectory between the window 5 and the compartment 8, thus preventing the glass from stopping or vibrating while the vehicle is running, and the unit 22 can be easily removed from the door 1 to simplify the handling operations since the small springs 32 enable the profiled element 24 to be removed.

## Claims

1. A vehicle door (1) of the type comprising:
- a framework (2) including: a frame (4) having two upright frame members (14,15) and a upper frame member (16) extending therebetween, said upright and upper members being provided with a channel such that the channel cavity (20) faces towards the door exterior along the frame (4); a profiled supporting element (24) including two upright frame elements (25) and a upper frame element (26) extending therebetween; snap-hooking means (32) for snap fastening said profiled supporting element (24) within said cavity (20); and a first peripheral seal strip (40) housed within the profiled supporting element (24);
- a compartment (8) with accessories hidden by an outer sheet panel (3) defining with said framework (2) a window opening (5); and
- a window glass (6) slidably mounted on said framework (2) for movement between a lowered position and a raised position for opening and closing said window opening (5), respectively, the window glass (6) being provided with L-shaped guide shoes (28), said shoes (28) being slidably positioned within a space let free by the first seal strip (40) inserted within the profiled supporting element (24);
- and wherein said supporting element (24) is partly housed inside said compartment (8),
- said frame (4) is provided with a perimeter tongue (50) astride of which there is mounted a second peripheral seal strip (52) and said opposite peripheral seal strip (40) is of uniform cross-section, characterised in that:
- said first peripheral seal strip (40) comprises two opposite, laterally cantilever, first lips (42,43) facing said frame (4) and fluid-tight cooperating with it;
- one of said first lips (42) is L-shaped and supports in correspondence with its bend a second lip (45) defining with it a T and fluid tight cooperating with a surface (46) of said sliding glass (6) facing towards the vehicle interior;
- said perimeter tongue (50) of the frame (4) extends front cantilever and on one side with respect to said front surface (18) of the frame (4) itself; and
- the second perimeter seal strip (52) comprises at least one lip (54) laterally cantilever therefrom and slide-cooperating in fluid tight manner with a surface (56) of said glass (6) facing towards the exterior of the vehicle;
- the sliding glass (6) forming with said first strip (40) and said profiled element (24) a self-supporting operating unit (22), which can be assembled and tested off-line, independent of the mounting on said frame (4), and wherein the sliding glass (4), upon mounting of the unit (22) onto said frame (4), is clamped in sliding and fluid tight manner between said lips (45,54) of said first and second strips (40,52).

2. A vehicle door (1) as claimed in claim 1, wherein said profiled element (24) comprises a pair of upright frame members (25) longer than those of said frame (4), partly housed within said compartment (8) through a communication aperture (11) provided at the base of said window (5), between the latter and said compartment (8).

3. A vehicle door (1) as claimed in claim 2, wherein said members (25) of the profiled element (24) are provided, at the level of their respective extreme ends with securing means (30) to said framework (2) of the door with which the window frame (4) is rigid.

4. A vehicle door (1) as claimed in anyone of the preceding claims, wherein said snap-hooking means comprise a plurality of small U-springs (32) housed within said cavity (20), between the frame (4) and the profiled element (24), said springs (32) being fixed within said cavity (20) between a bottom wall (33) and respective side edges (34) of the cavity (20), said edges (34) being shaped so as to define respective front shoulders opposing said bottom wall (33); and said springs (32) being further provided each with a respective locking rear element (35) engaging through said bottom wall (33) of the cavity (20).

5. A vehicle door (1) as claimed in claim 4, wherein said U-shaped springs (32) comprise respective resilient tongues (38) under which respective rear side projections (39) of said profiled element (24) are arranged to be engaged.

6. A vehicle door (1) as claimed in one of the preceding claims, wherein said first seal strip (40) is snap fixed within the profiled element (24) by respective edges (41) thereof bent to face into the element (24) interior.

7. A vehicle door (1) as claimed in one of the preceding claims, wherein said second seal strip (52) is provided with a U-shaped rigid core (53).

8. A method for making a vehicle door (1) as claimed in anyone of the foregoing claims, with the method step of making a supporting framework (2) of the door (1) comprising a window delimiting frame (4) and provided thereon, along the whole development thereof, with a channel-shaped front cavity (20);
**characterized** in further comprising the steps of:
- mounting, off the assembly line of the vehicle, of a self-supporting operating unit (22) comprising: the channel-shaped profiled element (24) copying the shape of said window frame (4) in such a manner as to be able to be accommodated into said channel-shaped cavity (20) thereof; the first peripheral seal strip (40) inserted within the profiled element (24); and the sliding glass (6) slidingly coupled with respective upright frame members (25) of the profiled element (24) by means of respective guide shoes (28) co-moulded with the glass (6) and slidingly inserted into the seal strip (40);
- snap-inserting a plurality of small U-shaped springs (32) within said channel-shaped cavity (20) of the window frame (4);
- mounting, on the frame (4) and within said compartment (8) for accessories underlying the frame (4), of said self-supporting operating unit (22) by inserting the latter through a communication aperture (11) between said compartment (8) and the window (5); and
- locking of said self-supporting unit (22) by snap-inserting the profiled element (24) into said small U-springs (32).

## Patentansprüche

1. Fahrzeugtür (1), des Typs, der enthält:
- einen Rahmen (2) mit: einem Rahmen (4) mit zwei aufrechten Rahmenelementen (14, 15) und einem oberen Rahmenelement (16), das sich zwischen diesen erstreckt, wobei die aufrechten und oberen Elemente mit einem Kanal versehen sind, so daß der Kanalhohlraum (20) entlang dem Rahmen (4) dem Türäußeren zugewandt ist; einem Profilunterstützungselement (24) mit zwei aufrechten Rahmenelementen (25) und einem oberen Rahmenelement (26), das sich zwischen diesen erstreckt; einer Schnapphakenvorrichtung (32) zum Schnappbefestigen des Profilunterstützungselements (24) innerhalb des Hohlraums (20); und einem ersten Umfangsdichtungsstreifen (40), der innerhalb des Profilunterstützungselements (24) angeordnet ist;
- einen Zwischenraum (8) mit Hilfsvorrichtungen, der von einem Außenblech (3) verdeckt ist, welches mit dem Rahmen (2) eine Fensteröffnung (5) definiert; und
- eine Fensterglasscheibe (6), die gleitend im Rahmen (2) montiert ist, um sich zum Öffnen bzw. Schließen der Fensteröffnung (5) zwischen einer abgesenkten Position und einer angehobenen Position zu bewegen, wobei die Fensterglasscheibe (6) mit L-förmigen Führungsschuhen (28) versehen ist, die innerhalb eines Freiraums, der von einem in das Profilunterstützungselement (24) eingesetzten ersten Dichtungsstreifen (40) freigelassen wird, gleitend angeordnet sind;
- und wobei das Unterstützungselement (24) teilweise im Zwischenraum (8) aufgenommen ist, der Rahmen (4) mit einer Umfangszunge (50) versehen ist, auf der rittlings ein zweiter Umfangsdichtungsstreifen (52) montiert ist, und der gegenüberliegende Umfangsdichtungsstreifen (40) einen einheitlichen Querschnitt besitzt,
**dadurch gekennzeichnet,** daß
- der erste Umfangsdichtungsstreifen (40) zwei gegenüberliegende, in Querrichtung frei abstehende erste Lippen (42, 43) umfaßt, die dem Rahmen (4) zugewandt sind und mit diesem flüssigkeitsdicht abschließen;
- eine dieser ersten Lippen (42) L-förmig ist und an ihrer Biegung eine zweite Lippe (45) trägt, mit dieser ein T bildet und mit einer Oberfläche (46) der gleitenden Glasscheibe (6), die dem Fahrzeuginneren zugewandt ist, flüssigkeitsdicht abschließt;
- die Umfangszunge (50) des Rahmens (40) an einer Seite bezüglich der vorderen Oberfläche (18) des Rahmens (4) frei nach vorne ragt; und
- der zweite Umfangsdichtungsstreifen (52) wenigstens eine Lippe (54) umfaßt, die quer von diesem frei absteht und mit einer Oberfläche (56) der Glasscheibe (6), die dem Fahrzeugäußeren zugewandt ist, gleitend flüssigkeitsdicht abschließt;
- die gleitende Glasscheibe (6) mit dem ersten Streifen (40) und dem Profilelement (24) eine selbsttragende Betätigungseinheit (22) bildet, die unabhängig von der Montage am Rahmen (4) neben der Montagestraße zusammengefügt und geprüft werden kann, wobei die gleitende Glasscheibe (4) aufgrund der Befestigung der Einheit (22) am Rahmen (4) gleitend und flüssigkeitsdicht zwischen die Lippen (45, 54) der ersten und zweiten Streifen (40, 52) geklemmt wird.

2. Fahrzeugtür (1) nach Anspruch 1, bei der das Profilelement (24) zwei aufrechte Rahmenelemente (25) umfaßt, die länger sind als jene des Rahmens (4) und teilweise durch eine Verbindungsöffnung (11), die an der Unterkante des Fensters (5) zwischen dem letzteren und dem Zwischenraum (8) vorhanden ist, im Zwischenraum (8) aufgenommen sind.

3. Fahrzeugtür (1) nach Anspruch 2, in der die Elemente (25) des Profilelements (24) an ihren entsprechenden äußersten Enden mit Befestigungsvorrichtungen (30) am Rahmen (2) der Tür, mit der der Fensterrahmen (4) starr verbunden ist, befestigt sind.

4. Fahrzeugtür (1) nach einem der vorangehenden Ansprüche, in der die Schnapphakenvorrichtungen mehrere kleine U-Federn (32) umfassen, die innerhalb des Hohlraums (20) zwischen dem Rahmen (4) und dem Profilelement (24) angeordnet sind, wobei die Federn (32) innerhalb des Hohlraums (20) zwischen einer unteren Wand (33) und entsprechenden Seitenkanten (34) des Hohlraums (20) befestigt sind und die Kanten (34) so geformt sind, daß sie entsprechende, der unteren Wand (33) gegenüberliegende vordere Schultern definieren; und in der ferner die Federn (32) jeweils mit einem entsprechenden hinteren Befestigungselement (35) versehen sind, das mit der unteren Wand (33) des Hohlraums (20) in Eingriff ist.

5. Fahrzeugtür (1) nach Anspruch 4, in der die U-förmigen Federn (32) entsprechende Federzungen (38) umfassen, unter die entsprechende rückseitige Vorsprünge (39) des Profilelements (24) eingreifen.

6. Fahrzeugtür (1) nach einem der vorangehenden Ansprüche, bei der der erste Dichtungsstreifen (40) im Profilelement (24) mittels entsprechender Kanten (41) desselben, die nach innen in das Element (24) gebogen sind, eingeschnappt ist.

7. Fahrzeugtür (1) nach einem der vorangehenden Ansprüche, bei der der zweite Dichtungsstreifen (52) mit einem U-förmigen steifen Kern (53) versehen ist.

8. Verfahren zur Herstellung einer Fahrzeugtür (1), wie sie in irgendeinem der vorangehenden Ansprüche definiert ist, mit dem Verfahrensschritt des Herstellens eines Tragrahmens (2) der Tür (1) mit einem Fensterbegrenzungsrahmen (4) und darauf vorgesehenem kanalförmigen vorderen Hohlraum (20) entlang dem gesamten Verlauf desselben;
**gekennzeichnet durch** die weiteren Schritte:
- Montieren einer selbsttragenden Betätigungseinheit (22) außerhalb der Fahrzeugmontagestraße, mit: dem kanalförmigen Profilelement (24), das die Form des Fensterrahmens (4) derart nachbildet, daß es in den kanalförmigen Hohlraum (20) desselben eingefügt werden kann; dem ersten Umfangsdichtungsstreifen (40) der in das Profilelement (24) eingesetzt ist; sowie der gleitenden Glasscheibe (6), die mit entsprechenden aufrechten Rahmenelementen (25) des Profilelements (24) über entsprechende Führungsschuhe (28), die an die Glasscheibe (6) angegossen sind und gleitend in den Dichtungsstreifen (40) eingesetzt sind, gleitend verbunden ist;
- Einschnappen mehrerer kleiner U-förmiger Federn (32) im kanalförmigen Hohlraum (20) des Fensterrahmens (4);
- Montieren der selbsttragenden Betätigungseinheit (22) im Rahmen (4) und im Zwischenraum (8) für Hilfseinrichtungen unterhalb des Rahmens (4) durch Einsetzen der selbsttragenden Betätigungseinheit (22) durch eine Verbindungsöffnung (11) zwischen dem Zwischenraum (8) und dem Fenster (5); und
- Befestigen der selbsttragenden Einheit (22) durch Einschnappen des Profilelements (24) in die kleinen U-Federn (32).

## Revendications

1. Porte de véhicule (1) du type comprenant :
une ossature (2) incluant : un cadre 4 comportant deux éléments de cadre verticaux (14,15) et un élément de cadre supérieur (16) qui s'étend entre ces derniers, lesdits éléments verticaux et supérieur ayant un profil en U de sorte que la cavité (20) du U fait face à l'extérieur de la porte, le long du cadre (4) ; un élément de support profilé (24) incluant deux éléments de cadre verticaux (25) et un élément de cadre supérieur (26) qui s'étend entre ces derniers ; des moyens d'accrochage élastique (32) pour fixer par enclenchement élastique ledit élément de support profilé (24) dans ladite cavité (20) ; et une première bande d'étanchéité périphérique (40) logée à l'intérieur dudit élément de support profilé (24) ;
un logement (8) contenant des accessoires cachés par un panneau extérieur en tôle (3) qui définit, avec ladite ossature (2), une ouverture de fenêtre (5) ; et
une vitre (6) montée de façon coulissante sur ladite ossature (2) pour un mouvement entre une position descendue et une position relevée,afin d'ouvrir et de fermer ladite ouverture de fenêtre (5), respectivement, la vitre (6) étant munie de patins de guidage en forme de L (28), lesdits patins (28) étant placés de façon coulissante dans un espace laissé libre par la première bande d'étanchéité (40) insérée dans l'élément de support profilé (24) ;
et dans laquelle ledit élément de support (24) est partiellement logé à l'intérieur dudit logement (8), ledit cadre (4) comporte une languette périmétrique (50) à cheval sur laquelle est montée une deuxième bande d'étanchéité périphérique (52), et ladite bande d'étanchéité périphérique opposée (40) est de section transversale uniforme ;
caractérisée en ce que :
ladite première bande d'étanchéité périphérique (40) comprend deux premières lèvres opposées et latéralement en porte-à-faux (42,43) en regard dudit cadre (4) et coopérant de façon étanche au fluide avec ce dernier ;
une des dites premières lèvres (42) est en forme de L et supporte, en correspondance de son coude, une deuxième lèvre (45) qui définit un T avec ladite première lèvre et qui coopère de façon étanche au fluide avec une surface (46) de ladite vitre coulissante (6) tournée vers l'intérieur du véhicule ;
ladite languette périmétrique (50) du cadre (4) s'étend en porte-à-faux vers l'intérieur et sur un seul côté par rapport à ladite surface avant (18) du cadre (4) lui-même ; et
la deuxième bande d'étanchéité périmétrique (52) comprend au moins une lèvre (54) latéralement en porte-à-faux et coopérant de façon glissante et étanche au fluide avec une surface (56) de ladite vitre (6) tournée vers l'extérieur du véhicule ;
la vitre coulissante (6) formant, avec ladite première bande (40) et ledit élément profilé (24), un sous-ensemble fonctionnel autoporteur (22) qui peut être assemblé et contrôlé en dehors de la chaîne de montage, indépendamment du montage dudit cadre (4), et la vitre coulissante (4), lors du montage du sous-ensemble (22) sur ledit cadre (4), étant serrée de manière glissante et étanche au fluide entre lesdites lèvres (45,54) des première et deuxième bandes d'étanchéité (40,52).

2. Porte de véhicule (1) suivant la revendication 1, dans laquelle ledit élément profilé (24) comprend deux parties de cadre verticales (25) plus longues que celles dudit cadre (4), qui se logent partiellement dans ledit logement (8) à travers un passage de communication (11) prévu à la base de ladite fenêtre (5), entre cette dernière et ledit logement (8).

3. Porte de véhicule (1) suivant la revendication 2, dans laquelle lesdites parties (25) de l'élément profilé (24) comportent, au niveau de leurs extrémités respectives, des moyens de fixation (30) à la dite ossature (2) de la porte dont le cadre de fenêtre (4) est solidaire.

4. Porte de véhicule (1) suivant une quelconque des revendications précédentes, dans laquelle les dits moyens d'accrochage élastique comprennent une pluralité de petits ressorts en U (32) logés dans ladite cavité (20), entre le cadre (4) et l'élément profilé (24), lesdits ressorts (32) étant fixés à l'intérieur de ladite cavité (20) entre une paroi inférieure (33) et les bords latéraux respectifs (34) de la cavité (20), lesdits bords (34) étant formés de manière à définir des épaulements frontaux respectifs à l'opposé de ladite paroi de fond (33), et lesdits ressorts (32) comportant chacun un élément de blocage arrière respectif (35) qui s'enclenche à travers ladite paroi de fond (33) de la cavité (20).

5. Porte de vhéicule (1) suivant la revendication 4, dans laquelle lesdits ressorts en forme de U (32) comprennent des doigts élastiques respectifs (38) sous lesquels des saillies latérales arrière respectives (39) dudit élément profilé (24) peuvent s'engager.

6. Porte de véhicule (1) suivant une des revendications précédentes, dans laquelle ladite première bande d'étanchéité (40) est fixée élastiquement dans l'élément profilé (24) par ses bords respectifs (41) qui sont pliés de manière à s'encastrer à l'intérieur de l'élément (24).

7. Porte de véhicule (1) suivant une des revendications précédentes, dans laquelle ladite deuxième bande d'étanchéité (52) comporte une âme rigide en forme de U (53).

8. Méthode de fabrication d'une porte de véhicule (1) suivant une des revendications précédentes, comprenant l'étape de fabrication d'une ossature auto-porteuse (2) de la porte (1) comportant un cadre de délimitation de fenêtre (4) qui présente, sur tout son périmètre, une cavité frontale en forme de U (20) ; caractérisée en ce qu'elle comprend en outre les étapes de :
montage, en dehors de la chaîne d'assemblage du véhicule, d'un sous-ensemble fonctionnel autoporteur (22) qui comprend : l'élément profilé en forme de U (24) reproduisant la configuration dudit cadre de fenêtre (4) d'une manière telle que ledit élément profilé peut se loger dans ladite cavité en forme de U (20) dudit cadre ; la première bande d'étanchéité périphérique (40) insérée dans l'élément profilé (24) ; et la vitre coulissante (6) qui est reliée de façon coulissante à des parties verticales (25) de l'élément profilé (24) au moyen de patins de guidage respectifs (28) comoulés avec la vitre (6) et insérés de façon coulissante dans la bande d'étanchéité (40) ;
insertion par enclenchement élastique d'une pluralité de petits ressorts en forme de U (32) dans la dite cavité en forme de U (20) du cadre de fenêtre (4);
montage, sur le cadre (4)et à l'intérieur du dit logement (8) pour accessoires situé au-dessous du cadre (4), dudit sous-ensemble fonctionnel autoporteur (22) par insertion de ce dernier à travers un passage de communication (11) prévu entre ledit logement (8) et la fenêtre (5) ; et
blocage dudit sous-ensemble autoporteur (22) par enclenchement élastique de l'élément profilé (24) dans lesdits petits ressorts en U (32).
